# FASCICULE DE BREVET EUROPEEN

(11) **EP 1 910 796 B1**
(45) Date de publication et mention de la délivrance du brevet: **12.04.2017**
(21) Numéro de dépôt: 06794194.8
(22) Date de dépôt: 21.07.2006
(51) Int. Cl.: G01M 7/04, G01M 5/00, G01N 3/08, G01N 3/00, G01N 3/06

(54) **DISPOSITIF D'ESSAIS D'UNE STRUCTURE DE FUSELAGE A COURBURE LONGITUDINALE ET CIRCONFERENTIELLE**
EINRICHTUNG ZUM PRÜFEN EINER RUMPFSTRUKTUR MIT LONGITUDINAL- UND UMFANGSKRÜMMUNG
DEVICE FOR TESTING A FUSELAGE STRUCTURE WITH LONGITUDINAL AND CIRCUMFERENTIAL CURVATURE

(30) Priorité: 26.07.2005 FR 0507955
(43) Date de publication de la demande: 16.04.2008
(73) Titulaire: Airbus Operations, 31060 Toulouse (FR)
(72) Inventeur: SAVES-SAINT-GERMES, Cyrille, F-31600 Seysses (FR)
(74) Mandataire: Santarelli
(86) Numéro de dépôt international: PCT/FR2006/001789
(87) Numéro de publication internationale: WO 2007/012734

(56) Documents cités:
- WO-A-02/103326
- DE-A1- 19 721 845
- DE-C- 727 247
- DE-U1- 9 201 231
- DE-U1- 29 711 362
- US-A- 6 035 715

## Description

La présente invention concerne un dispositif d'essais associé à une structure de fuselage à double courbure.

Plus particulièrement, la présente invention vise à fournir un dispositif d'essais permettant de tester en statique, fatigue et tolérance aux dommages des structures de fuselage à double courbure, c'est-à-dire à courbure longitudinale et circonférentielle.

En pratique, ces structures de fuselage sont des couronnes de fuselage typiquement utilisées pour réaliser le fuselage arrière ou avant d'un avion.

Il est connu d'utiliser de tel dispositif d'essais pour appliquer sur la structure de fuselage au moyen d'un système d'application de forces, des efforts représentatifs des efforts subis par la structure de fuselage lors de son utilisation. Ces efforts sont typiquement des forces de traction ou de compression exercées dans la direction longitudinale de la structure, des forces de torsion selon la circonférence de la structure et des forces de pression liées à la différence de pression existant entre l'intérieur et l'extérieur de l'avion.

On connaît ainsi un dispositif d'essais permettant d'appliquer des forces de pression et un chargement mécanique axial sur une structure à simple courbure, du type d'une couronne cylindrique, tel que décrit dans le document "Development of a test fixture for fuselage curved panels", de M. Langon et C. Meyer, CEAT, ICAF 1999, pages 745 à 753.

Toutefois, un tel dispositif d'essais ne peut s'appliquer à une structure de fuselage à double courbure tout en restant représentatif des efforts réels subis par la structure de fuselage d'avion.

De même, le document DE 197 21 845 décrit un système d'application de forces à une structure cylindrique, à simple courbure. Ce système d'application de forces est monté sur la surface de la structure cylindrique à tester et permet d'appliquer uniquement une déformation locale à une portion de surface.

La présente invention a pour but de proposer un dispositif d'essais d'une couronne de fuselage à double courbure tel que défini dans la revendication 1.

Le dispositif d'essais associé à une couronne de fuselage à courbure longitudinale et courbure circonférentielle comprend des moyens d'application de forces sur la couronne de fuselage.

Il comprend des moyens de support adaptés à supporter ladite couronne de fuselage et les moyens d'application de forces, les moyens d'application de forces étant montés entre les moyens de support et des moyens d'introduction de forces solidaires de ladite couronne de fuselage et étant adaptés à appliquer des forces de torsion et de traction/compression tangentes en leur point d'application à la couronne de fuselage.

En appliquant ainsi des forces colinéairement à la structure de fuselage, c'est-à-dire qui restent tangentes en leur point d'application à la structure à double courbure, il est possible d'appliquer des efforts représentatifs avion auxquels est soumise la couronne de fuselage lors de son utilisation.

En pratique, les moyens d'introduction de forces sont formés d'une structure circulaire solidaire de la couronne de fuselage suivant une ligne circonférentielle.

En appliquant des forces au travers d'une structure sensiblement circulaire, il est possible d'appliquer des efforts uniformément répartis sur la circonférence de la structure de fuselage.

Selon une caractéristique de l'invention, la couronne de fuselage comprend une extrémité inférieure supportée sur les moyens de support et une extrémité supérieure, et les moyens d'introduction de forces sont fixés à l'extrémité supérieure de la couronne de fuselage.

Ainsi, l'intégralité de la structure de fuselage est soumise aux forces appliquées et non seulement une portion.

De préférence, l'extrémité supérieure est une extrémité de plus grand diamètre de la structure de fuselage.

Ainsi, les perturbations locales au niveau de l'application des forces sont peu significatives par rapport à l'ensemble de la structure de fuselage.

Selon une autre caractéristique avantageuse de l'invention, les moyens d'introduction de forces comprennent des moyens de fixation par pincement adaptés à solidariser en traction et en torsion les moyens d'introduction de forces à l'extrémité supérieure de la couronne de fuselage.

La fixation par pincement de l'extrémité supérieure de la structure de fuselage permet d'éviter tout élément de fixation endommageant la structure de fuselage.

En outre, le montage et démontage de la structure dans ces moyens de fixation sont facilités, notamment lors des interventions d'inspection de la structure de fuselage après sollicitation.

D'autres particularités et avantages de l'invention apparaîtront encore dans la description ci-après.

Aux dessins annexés, donnés à titre d'exemples non limitatifs :
- la figure 1 est une vue en perspective schématique d'une structure de fuselage à double courbure ;
- la figure 2 illustre en perspective un dispositif d'essais conforme à un mode de réalisation de l'invention ;
- la figure 3 est une vue partielle en élévation simplifiée illustrant le principe du dispositif d'essais de la figure 2 ;
- la figure 4 est une vue en perspective d'un moyen d'application de forces d'un premier type du dispositif d'essais de la figure 2 ;
- la figure 5 est une vue en perspective d'un moyen d'application de forces d'un second type du dispositif d'essais de la figure 2 ;
- la figure 6 est une vue en perspective de moyens de support du dispositif d'essais de la figure 2 ;
- la figure 7 est une vue en section transversale partielle des moyens de support de la figure 6 ;
- la figure 8 est une vue en coupe partielle de moyens de fixation de la structure de fuselage sur les moyens de support de la figure 6 ;
- la figure 9 est une vue de dessus d'un élément des moyens de fixation de la figure 8 ;
- la figure 10 est une vue en coupe transversale selon la ligne X-X de l'élément de la figure 9 ;
- la figure 11 est une vue en perspective d'un second élément des moyens de fixation de la figure 8 ;
- la figure 12 est une vue en coupe transversale partielle d'un troisième élément des moyens de fixation de la figure 8 ;
- la figure 13 est une vue de dessus de moyens d'introduction de force du dispositif de la figure 2 ;
- la figure 14 est une vue en coupe transversale partielle selon la ligne XIV-XIV à la figure 13 ;
- la figure 15 est une vue en perspective de moyens de pressurisation du dispositif d'essais de la figure 2 ; et
- la figure 16 est une vue en coupe longitudinale des moyens de pressurisation de la figure 15.

On va décrire à présent en référence aux figures un exemple de réalisation d'un dispositif d'essais d'une structure de fuselage.

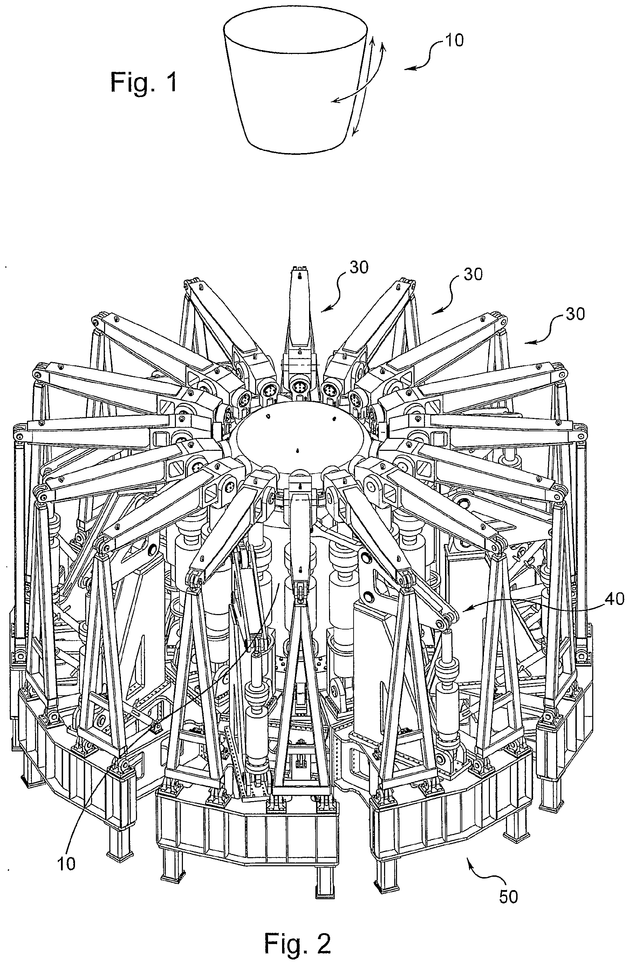

Le dispositif d'essais qui va être décrit ci après permet de tester une structure 10 à double courbure telle qu'illustrée à la figure 1.

Il s'agit par exemple d'une couronne de fuselage présentant, comme illustré par les flèches sur la figure 1, à la fois une courbure longitudinale et une courbure circonférentielle.

Le dispositif d'essais permet de tester en statique, fatigue et tolérance aux dommages une telle structure.

De manière générale, il permet d'appliquer des efforts représentatifs de ceux subis par une structure d'avion, et notamment des forces de traction ou de compression dans la direction longitudinale, des forces de torsion par rapport à l'axe longitudinal ou encore des forces de pression dues à la différence de pression entre l'intérieur de la structure et l'extérieur.

Bien entendu, il est nécessaire de pouvoir combiner l'ensemble de ces types de force à exercer sur la structure.

Actuellement, le comportement d'une structure de fuselage à double courbure est appréhendé à l'aide d'essais et simulations numériques sur des structures à simple courbure.

Des données de test sont ainsi nécessaires pour valider et calibrer les modèles numériques utilisés pour les configurations à double courbure afin d'appréhender leur comportement.

Le dispositif d'essais tel que décrit ci après permet en outre d'évaluer et d'étudier le comportement de nouveaux matériaux (métalliques et composites) ainsi que d'étudier de nouvelles technologies.

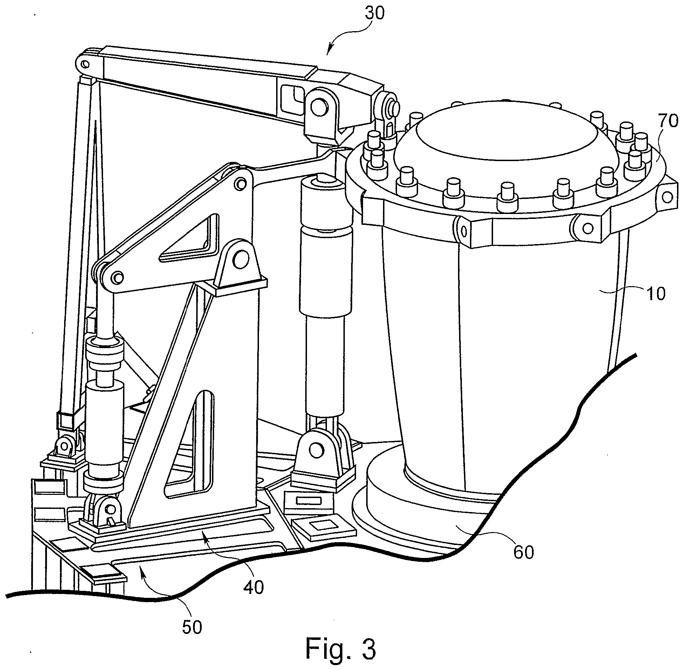

On a illustré de manière générale sur les figures 2 et 3 un dispositif d'essais conforme à un mode de réalisation de l'invention.

Dans son principe, le dispositif d'essais comporte des moyens d'application de forces 30, 40 montés autour de la structure de fuselage 10 sur des moyens de support 50.

Comme bien illustré schématiquement sur la figure 3, la structure de fuselage 10 est montée au centre des moyens de support 50, grâce à des moyens de fixation 60. Les moyens d'application de forces 30, 40 sont montés à la périphérie entre les moyens de support 50 et des moyens d'introduction de forces 70 fixé à la structure de fuselage 10.

Dans ce mode de réalisation, les moyens d'application de forces 30 sont adaptés à appliquer une force d'un premier type, correspondant à une force longitudinale de traction ou de compression, appliquée dans la direction longitudinale de la structure de fuselage.

Les moyens d'application de forces 40 sont des moyens d'application de forces d'un second type adaptés à appliquer une force de torsion à la structure de fuselage 10, dans la direction circonférentielle de la structure de fuselage 10.

En pratique, afin d'uniformiser la répartition des efforts sur la structure de fuselage, ces moyens d'application de forces 30, 40 sont composés de plusieurs structures d'application de forces, disposées régulièrement à la périphérie de la structure de fuselage.

A titre d'exemple, dans ce mode de réalisation, les moyens d'application de forces longitudinales comportent seize structures identiques d'application de forces longitudinales 30.

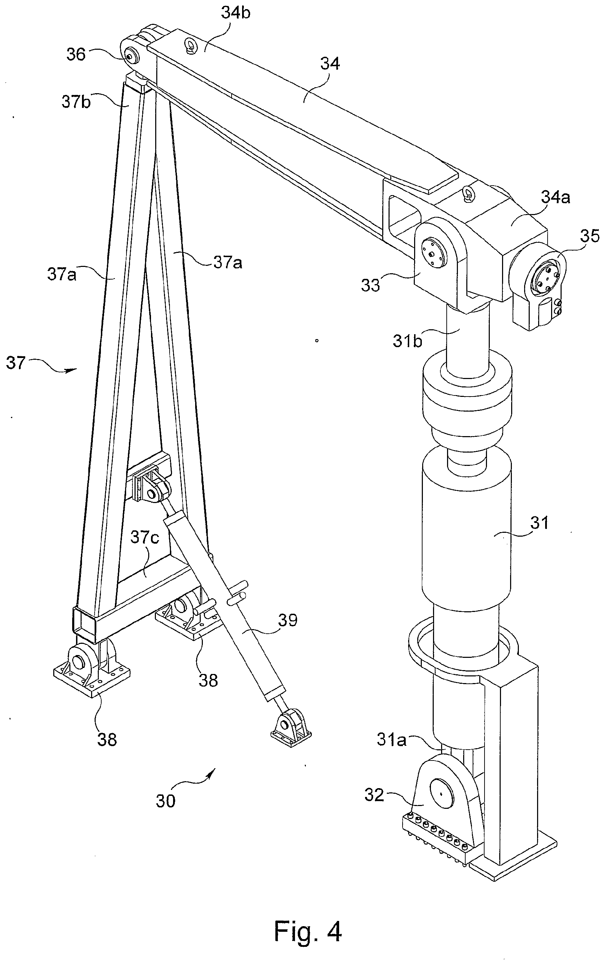

L'une d'entre elles est illustrée en détail à la figure 4.

Elle comporte un vérin hydraulique 31 monté sensiblement vertical et adapté à exercer une force de compression ou traction suivant l'axe de la tige du vérin. Ce vérin hydraulique 31 est monté par une liaison pivot à ses extrémités 31 a, 31 b autour d'un axe horizontal.

En particulier, au niveau de l'extrémité inférieure 31a, le vérin hydraulique 31 est monté à pivotement dans une chape 32 destinée à être fixée sur les moyens de support 50.

Le vérin hydraulique 31 comporte une extrémité d'actionnement 31 b, correspondant ici à l'extrémité supérieure du vérin hydraulique 31. Cette extrémité d'actionnement 31b est fixée au moyen d'une chape 33 à une première extrémité 34a d'un bras de levier 34.

La première extrémité 34a comporte des moyens de fixation 35 destinés à fixer le bras de levier 34 aux moyens d'introduction de forces 70. Une seconde extrémité 34b du bras de levier 34 est fixée, également au moyen d'une liaison pivotante 36, à un pylône 37 destiné à être monté sur les moyens de support 50.

Le montage du pylône 37 est réalisé au niveau d'organes de fixation 38 par l'intermédiaire également de liaisons pivotantes du même type que les chapes 32 et 33. De préférence, afin de rigidifier le pylône 37, celui-ci est constitué de deux jambes 37a inclinées par rapport à l'axe vertical et réunies au niveau d'une extrémité 37b fixée à la seconde extrémité 34b du bras de levier 34 par la liaison pivotante 36.

Les jambes 37a du pylône 37 sont fixées respectivement par les organes de fixation 38 aux moyens de support 50, une traverse 37c s'étendant entre les jambes 37 pour augmenter la rigidité de la structure du pylône 37.

Cette structure particulière du pylône 37 est particulièrement bien adaptée à reprendre les efforts exercés par le vérin 31 sur la structure de fuselage par l'intermédiaire du bras de levier 34.

Comme décrit ci-dessus, le vérin 31, le bras de levier 34 et le pylône 37 sont fixés entre eux et aux moyens de support 50 grâce à des liaisons pivotantes respectivement autour d'axes horizontaux parallèles les uns aux autres.

Ces vérin, bras de levier et pylône constituent ainsi un quadrilatère déformable permettant en particulier par inclinaison du vérin 31 autour de la chape de fixation 32, d'écarter le vérin 31, le bras de levier 34 et le pylône 37 de la structure de fuselage 10 pour faciliter l'accès à celle-ci, notamment pour inspecter la structure après application d'un ensemble de sollicitations ou permettre la mise en place de la structure de fuselage 10 sur les moyens de support 50.

On notera que l'ensemble des fixations aux moyens de support 50 est réalisé grâce à des ensembles vis-écrou de dimension et taille suffisantes pour résister aux efforts longitudinaux appliqués à la structure de fuselage.

Par ailleurs, cette structure d'application de forces longitudinale 30 est complétée par un bras auxiliaire 39 s'étendant entre le pylône 37 et les moyens de support 50.

Ce bras auxiliaire 39 permet de maintenir l'ensemble déformable constitué par le vérin 31, le bras de levier 34 et le pylône 37 lorsque le bras de levier 34 est détaché des moyens d'introduction de forces 70, et d'éviter que le quadrilatère déformable ne s'incline entièrement à l'horizontale.

Grâce au montage du vérin 31 au niveau des chapes 32, 33, la direction de travail de la tige du vérin hydraulique 31 peut suivre la déformation longitudinale de la structure de fuselage, de telle sorte que la force exercée demeure colinéaire à la structure de fuselage 10, c'est-à-dire que la force appliquée est à tout instant tangente en son point d'application à la surface à courbure longitudinale de la structure de fuselage.

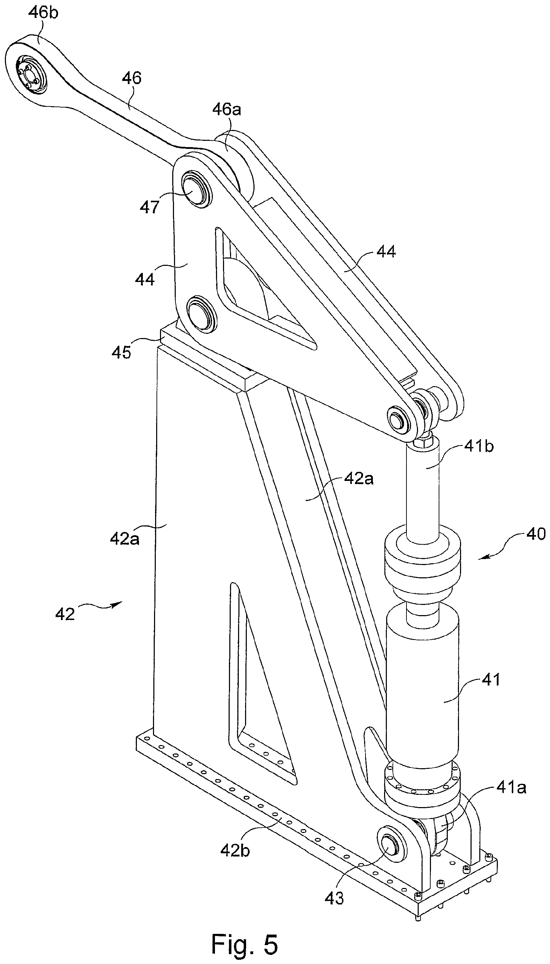

On va décrire à présent en référence à la figure 5 les moyens d'application de forces d'un second type 40 adaptés à appliquer une force de torsion à la structure de fuselage.

Ces moyens d'application de forces d'un second type comportent huit structures identiques d'application de forces, l'une d'entre elles étant illustrée en détail à la figure 5.

Les moyens d'application de forces d'un second type 40 comportent un vérin hydraulique 41 monté sur une structure de support 42. Cette structure de support 42 est dans ce mode de réalisation constituée de deux plaques triangulaires 42a disposées parallèlement l'une à l'autre et fixées à une plaque de support 42b destinée à être fixée sur les moyens de support 50.

Le vérin hydraulique 41 comporte une extrémité inférieure 41 a montée par une liaison pivotante 43 entre les plaques 42a de la structure de support 42.

Un bras de levier formant bielle 44 est par ailleurs fixé d'une part à une extrémité d'actionnement 41 b du vérin hydraulique 41 et d'autre part sur un palier de support 45 solidaire de la structure de support 42.

Les fixations de l'extrémité d'actionnement 41 b et du palier de support 45 au bras de levier formant bielle 44 sont des liaisons pivotantes permettant lors de la translation de la tige du vérin 41 un pivotement du bras de levier formant bielle 44 autour du palier de support 45.

Ce pivotement est transmis à un bras de levier auxiliaire 46 monté également à pivotement à une de ses extrémités 46a autour d'un axe de pivotement 47 sur le bras de levier formant bielle 44.

L'extrémité libre 46 b du bras de levier auxiliaire est munie d'une liaison rotule et est adaptée à être fixée aux moyens d'introduction de forces 70. Grâce à cette liaison rotule à trois degrés de liberté en rotation, la force appliquée par le bras de levier auxiliaire 46 sous l'action du vérin hydraulique 41 est une force tangentielle à la surface de courbure circonférentielle de la structure de fuselage 10, même après déformation de celle-ci selon ses directions longitudinale ou circonférentielle.

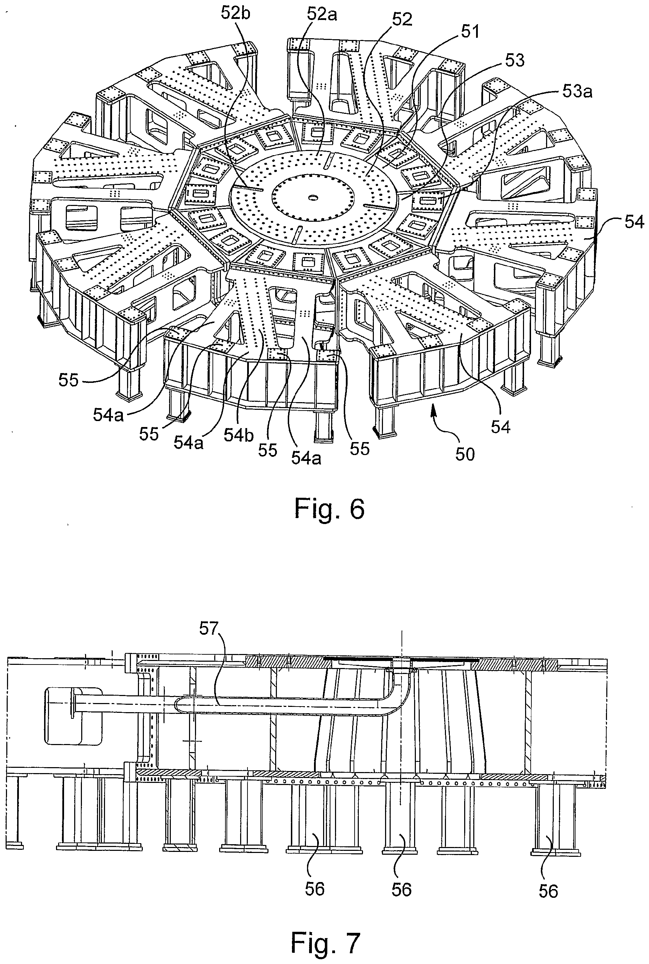

On va décrire à présent en référence aux figures 6 et 7 les moyens de support 50.

Comme illustré à la figure 6, les moyens de support 50 comporte une plateforme centrale 51 prévue pour supporter la structure de fuselage 10. A cet égard, la plateforme comporte en son centre un disque 52 sur lequel est fixé la structure de fuselage par des moyens de fixation qui seront décrits ultérieurement.

En outre, la plateforme 51 comporte des extensions 53 au-delà du disque 52, adaptées à supporter des moyens d'application de forces. Ces extensions 53 sont ici au nombre de huit. La plateforme 51 présente ainsi globalement une forme d'octogone, chaque extension 53 constituant un côté de l'octogone.

Dans ce mode de réalisation dans lequel les moyens d'application de forces de traction/compression comportent seize vérins hydrauliques, chaque extension 53 comporte deux supports de fixation 53a sur lesquels peuvent être fixés respectivement deux vérins hydrauliques 31 d'application d'une force de traction/compression de fixation 32, au moyen d'une chape de fixation 32.

Les moyens de support 50 comportent en outre une structure périphérique constituée d'extensions 54 s'étendant radialement par rapport à la plateforme centrale 51.

Plus particulièrement, cette structure périphérique comporte ici huit extensions 54 adjacentes et fixées respectivement aux huit côtés de la plateforme centrale 51.

Chaque extension 54 est constituée de profilés, et comporte en particulier deux profilés 54a s'étendant radialement et un profilé 54b sensiblement incliné par rapport aux profilés radiaux 54a.

Le profilé incliné 54b est adapté à supporter les moyens d'application de forces de torsion 40.

A cet effet, chaque profilé 54b comporte une série d'alésages permettant la fixation par vis-écrou d'une plaque de support 42b d'une structure d'application de forces de torsion 40.

En outre, chaque extension 54 comporte à la périphérie des emplacements 55 destinés à recevoir les organes de fixation 38 des pylônes 37 des moyens d'application de forces de traction ou de compression 30.

Les moyens de support 50 permettent ainsi de reprendre toutes les charges appliquées à la structure de fuselage 10 montée en son centre.

Ces moyens de support 50 ont ainsi globalement une forme circulaire adaptée au montage à la périphérie de la structure de fuselage 10 des différents moyens d'application de forces 30, 40.

Comme bien illustré sur les figures 6 ou 7, les moyens de support 50 comportent une série de piliers 56 permettant un encastrement de la structure au niveau du sol.

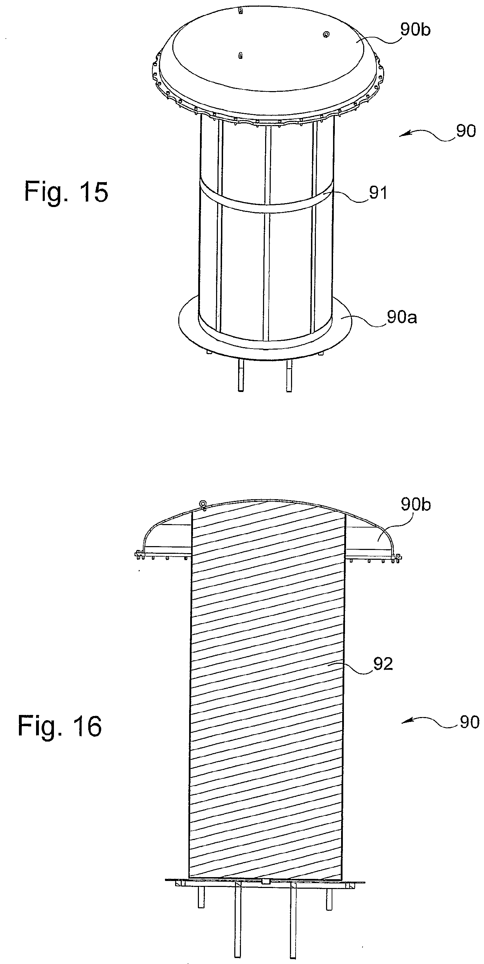

Comme bien illustré sur la figure 7, les moyens de support 50 logent une canalisation 57 permettant d'alimenter avec un fluide sous pression des moyens de mise en pression de l'intérieur de la structure de fuselage 10 qui seront décrits ultérieurement en référence aux figures 15 et 16.

La fixation de la structure de fuselage 10 sur les moyens de support 50 est réalisée par pincement (ou clampage) permettant de maintenir la structure de fuselage 50 pincée entre un anneau intérieur et un anneau extérieur, uniquement en exerçant une force de serrage, la structure de fuselage étant tenue par friction. Ce type de fixation présente l'avantage de ne pas endommager la structure de fuselage 10 lors des essais.

La structure de fuselage 10 est fixée au niveau de son petit diamètre par des moyens de fixation 60 sur les moyens de support 50.

Les moyens de fixation 60 comportent essentiellement un anneau extérieur 61, un anneau de contour 62, un anneau de pincement 63 et un anneau interne 64.

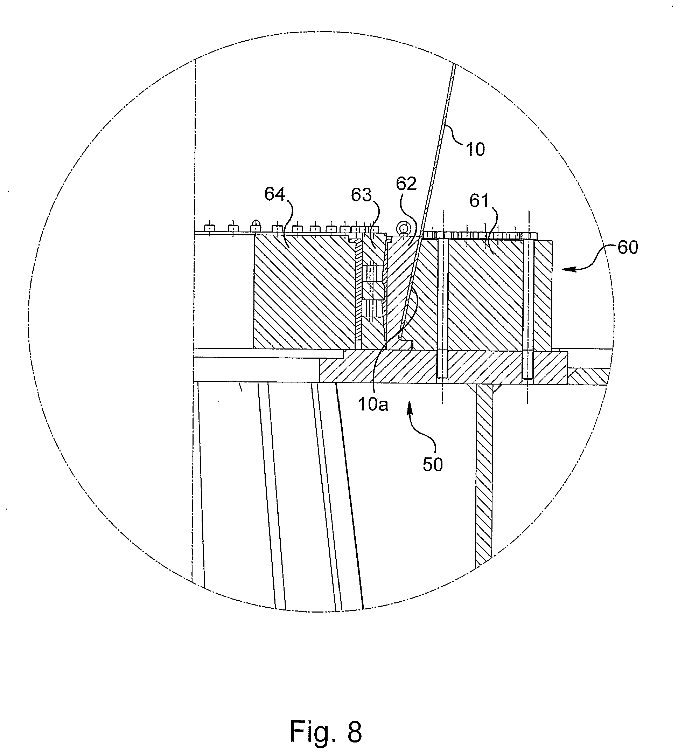

Comme bien illustré sur la figure 8, la structure de fuselage 10 est placée au niveau de son extrémité inférieure 10a entre l'anneau externe 61 et l'anneau de contour 62. Le maintien de la structure de fuselage 10 est réalisé uniquement par friction. Pour augmenter le coefficient de friction entre ses parties, les surfaces en regard de l'anneau de contour 62 et de l'anneau externe 61 peuvent être traitées pour augmenter leur rugosité.

L'anneau extérieur 61 est adapté à reprendre les efforts appliqués à la structure de fuselage 10 par les moyens d'application de forces 30, 40.

Afin de supporter les forces longitudinales, en particulier de traction, l'anneau extérieur 61 comporte une série d'alésages 61a adaptés au passage de vis de fixation. Les vis de fixation sont adaptées à être fixées dans des logements 52a du disque 52 de la structure centrale 51 des moyens de support 50.

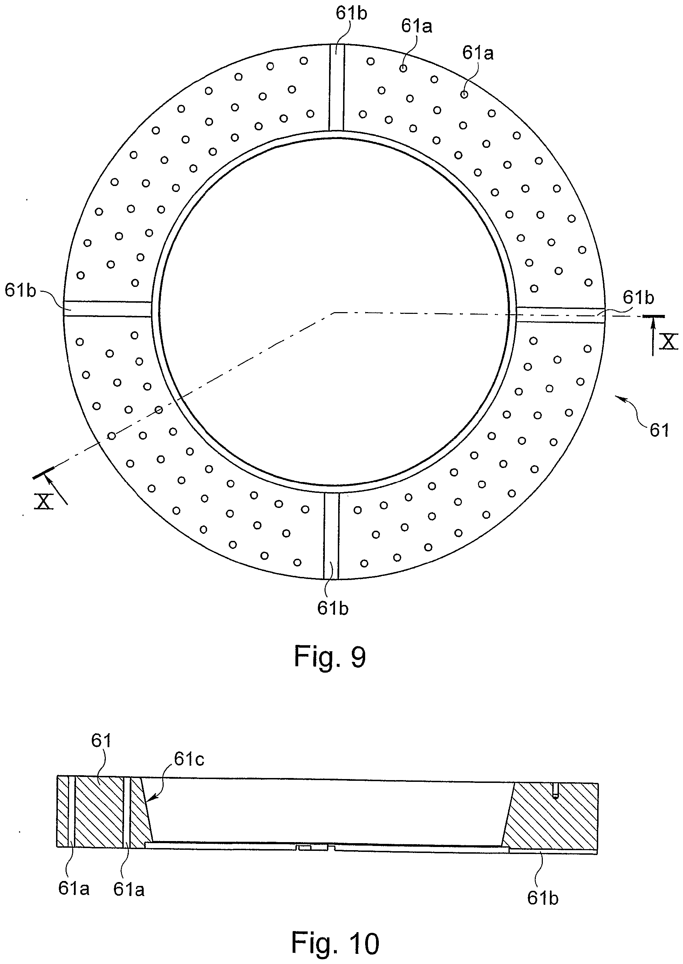

Par ailleurs, comme bien illustré sur la figure 9, l'anneau externe 61 comporte des gorges radiales, et ici quatre gorges radiales 61 b disposées en quadrature.

Ces gorges radiales 61 b ont par exemple une section transversale rectangulaire et sont de forme complémentaire à celle de nervures radiales 52b, prévues également en quadrature sur le disque 52 de la structure centrale 51 des moyens de support 51 illustrés à la figure 6.

Grâce à cette liaison par encastrement des nervures 52b dans les gorges 61 b, les forces de torsion introduites sur la structure de fuselage 10 et reprises par l'anneau extérieur 61 peuvent être transmises aux moyens de support 50 fixés au sol.

Comme bien illustré sur la figure 10, l'anneau externe 61 a une forme externe globalement cylindrique et une forme interne globalement tronconique, sa face interne 61 c étant adaptée à épouser la face externe de l'extrémité inférieure 10a de la structure de fuselage.

L'anneau de contour 62 est de préférence réalisé en plusieurs parties afin de permettre l'assemblage de cet anneau de contour 62 avec l'anneau externe 61. Dans cet exemple, l'anneau de contour 62 est formé de quatre secteurs s'étendant sur 90°.

Comme bien illustré à la figure 8, l'anneau de contour 62 comporte une face externe tronconique, complémentaire de la face interne 61c de l'anneau externe 61 afin de permettre le maintien par pincement de l'extrémité inférieure 10a de la structure de fuselage 10.

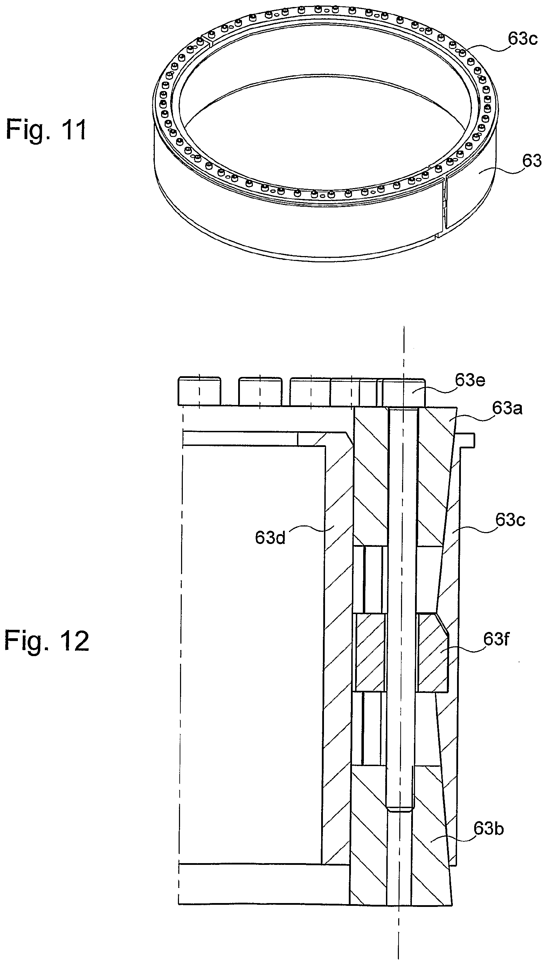

Afin de pouvoir régler la force de friction, un anneau de pincement 63 tel qu'illustré aux figures 11 et 12, est monté contre l'anneau de contour 62.

L'anneau de pincement 63 comporte deux anneaux en forme de cône 63a, 63b. Ces anneaux en forme de cône 63a, 63b sont placés entre deux portions cylindriques concentriques 63c, 63d définissant entre elles un logement pour les anneaux en forme de cône 63a, 63b.

Plus particulièrement, les anneaux en forme de cône 63a, 63b comportent une paroi intérieure cylindrique, destinée à coopérer avec la surface de la portion cylindrique intérieure 63d de l'anneau de pincement 63.

Les anneaux en forme de cône 63a, 63b comportent en outre des parois extérieures tronconiques destinées à venir en contact avec des faces inclinées internes de la portion cylindrique externe 63c de l'anneau de pincement 63.

Les deux anneaux en forme de cône 63a, 63b sont disposés tête bêche de telle sorte que chaque face tronconique forme respectivement un angle d'environ plus 5° ou moins 5° par rapport à un axe vertical.

Sur toute la périphérie de l'anneau de pincement 63 est prévue une série de vis de mise en tension 63e destinées à passer dans des alésages prévus à cet effet dans les anneaux en forme de cône 63a, 63b.

En outre, une pièce circulaire de guidage 63f solidaire des portions cylindriques concentriques 63c, 63d permet d'assurer le guidage vertical de chaque vis de mise en tension 63e.

En fonctionnement, en déplaçant les vis de mise en tension 63e selon un axe vertical, on rapproche ou on éloigne plus ou moins les anneaux en forme de cône 63a, 63b de telle sorte que la force exercée par la portion tronconique externe 63c de l'anneau de pincement 63 contre l'anneau de contour 62 peut être réglée.

On peut ainsi régler la force de serrage exercée par les moyens de fixation 60 sur la structure de fuselage 10.

Enfin, comme illustré à la figure 8, un anneau intérieur 64 est monté à l'intérieur de l'anneau de pincement 63. Il permet de reprendre toutes les forces radiales générées vers l'intérieur de l'élément de fixation 60 par l'anneau de pincement 63.

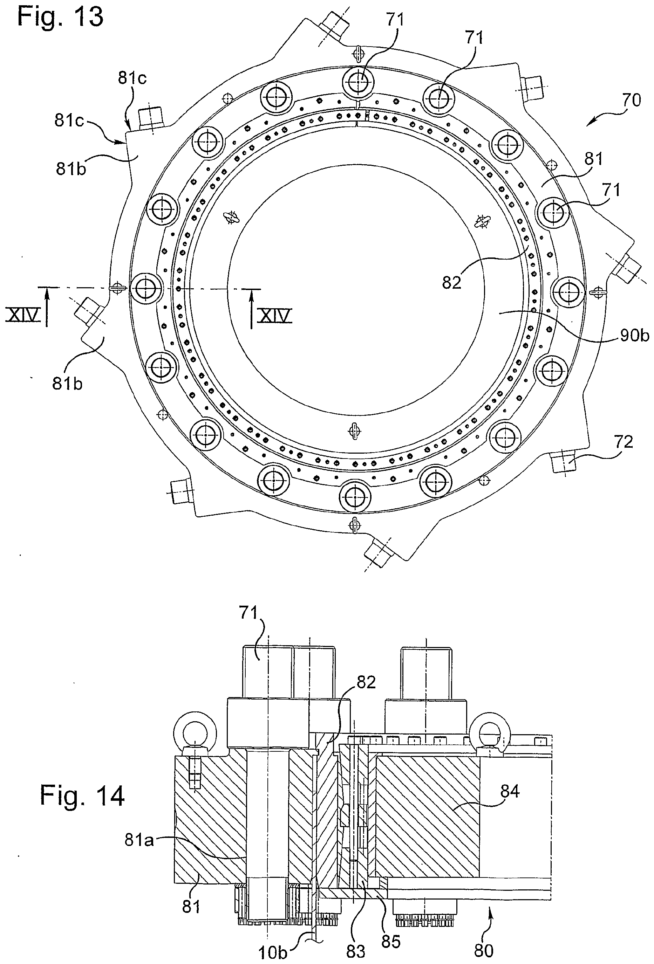

On va décrire à présent en référence aux figures 13 et 14, les moyens d'introduction de forces 70. Dans leur principe, ces moyens d'introduction de forces 70 sont formés d'une structure sensiblement circulaire adaptée à être fixée à la structure de fuselage 10 suivant une ligne circonférentielle de celle-ci.

Comme bien illustré sur la figure 3, les moyens d'introduction de forces 70 sont de préférence fixés à l'extrémité supérieure 10b de la structure de fuselage 10. Ainsi, l'application des forces est réalisée sur une partie de plus grande section de la structure de fuselage 10 de telle sorte que les perturbations au point d'application locale des forces n'a que peu d'impact sur le comportement de l'ensemble de la structure de fuselage 10.

Comme bien illustré à la figure 14, les moyens d'introduction de forces 70 comprennent des moyens de fixation par pincement 80 adaptés à solidariser en traction et en torsion les moyens d'introduction de forces 70 et l'extrémité supérieure 10b de la structure de fuselage 10.

Comme pour les moyens de fixation 60 de l'extrémité inférieure 10a de la structure de fuselage 10, les moyens de fixation 80 de l'extrémité supérieure 10b comportent un anneau externe 81, un anneau de contour 82, un anneau de pincement 83 et un anneau interne 84.

La fixation par pincement de l'extrémité supérieure 10b est identique à celle décrite précédemment en référence à la figure 11 et n'a pas besoin d'être décrite de nouveau ici.

Cependant, contrairement aux moyens de fixation 60 de l'extrémité inférieure 10a, les moyens de fixation 80 ne sont pas fixés à des moyens de support 50.

Par conséquent, un anneau de support 85, par exemple solidaire de l'anneau de contour 82, est destiné à supporter l'anneau de pincement 83 et l'anneau interne 84.

Par ailleurs, les moyens de fixation 80 comportent des éléments de fixation robustes pour permettre la fixation d'une part des éléments de fixation 35 de chaque moyen d'application de forces longitudinales 30 et d'autre part du bras de levier auxiliaire 46 au moyen de la liaison rotule 46b des moyens d'application de forces de torsion.

En particulier, l'anneau externe 81 comporte des trous filetés 81a dans lesquels sont vissées des vis 71 hautement résistantes. Ces vis 71 sont adaptées à être fixés à l'élément de fixation 35.

Comme bien illustré sur la figure 13, l'anneau externe 81 comporte seize vis 71 destinées à recevoir respectivement seize éléments de fixation 35 des moyens d'application de forces longitudinales 30.

Pour l'application des forces de torsion, l'extrémité 46b du bras de levier auxiliaire 46 est fixée par une liaison rotule au niveau d'écrous 72 disposés à la périphérie de l'anneau externe 81.

Comme bien illustré sur la figure 13, l'anneau externe 81 comporte huit paliers de fixation 81 b disposés uniformément à la périphérie.

Ces paliers de fixation 81 b sont disposés ainsi à 45° les uns des autres à la périphérie de l'anneau externe 81. Chaque palier 81 b est ici une dent triangulaire 81 b, chaque face verticale 81 c formant un angle de 45° avec un rayon des moyens d'introduction de forces 70 passant par l'arête de la dent 81b.

Enfin, le dispositif d'essais comprend des moyens de mise en pression 90 de l'intérieur de la structure de fuselage 10.

Comme bien illustré sur les figures 15 et 16, les moyens de mise en pression 90 comprennent dans leur principe des couvercles 90a, 90b fixés de manière étanche respectivement aux extrémités inférieure 10a et supérieure 10b de la structure de fuselage 10.

En pratique, un couvercle inférieur 90a est fixé de manière étanche au niveau du centre des moyens de support 50. Un couvercle supérieur 90b est fixé par une série de vis périphériques sur les moyens d'introduction de forces 70, et dans ce mode de réalisation dans des alésages correspondants prévus sur l'anneau de contour 82.

Les moyens de pressurisation 90 comportent en outre entre les couvercles 90a, 90b une structure en forme de cage 91 et des cloisons verticales 92 de séparation de l'espace intérieur de la structure en forme de cage 91.

Ces cloisons verticales 92 permettent de diminuer le volume à pressuriser et ainsi d'augmenter la sécurité du personnel en cas de fuite importante ou éventuellement d'explosion.

La structure en forme de cage 91 et les cloisons 92 sont ainsi adaptées à s'étendre à l'intérieur de la structure de fuselage.

L'alimentation en air pressurisé est réalisée au niveau du couvercle inférieur 90a qui comporte une ouverture d'introduction de l'air sous pression amené grâce à la conduite 57 décrite précédemment en référence à la figure 7.

Grâce au montage par liaisons pivotantes d'une part et liaison à rotule d'autre part des moyens d'application de forces 30, 40, les efforts mécaniques appliqués par les moyens d'application de forces 30, 40 sont colinéaires à la surface à double courbure de la structure de fuselage et demeurent colinéaires à cette surface même lorsque la structure de fuselage se déforme.

Grâce aux différents moyens d'application de forces et aux moyens de pressurisation, il est possible d'appliquer sur la structure tous les efforts mécaniques représentatifs d'un comportement réel de la structure de fuselage.

En particulier, il est possible d'appliquer les efforts maximums suivants :

| | Essai statique | Essai fatigue |
|---|---|---|
| 1 : Pression + traction | Fₘₐₓ = 17 000 kN | Fₘₐₓ = 10 000 kN |
| 2 : Pression + compression | ΔPₘₐₓ = 3.7 bar | ΔPₘₐₓ = 1.9 bar |
| 3 : Pression + torsion | Mₘₐₓ = 7 300 kN | Mₘₐₓ = 4 300 kN |
| | ΔPₘₐₓ = 3.7 bar | ΔPₘₐₓ = 1.9 bar |
| 4 : Pression + torsion + compression | Fₘₐₓ = 17 000 kN | Fₘₐₓ = 17 000 kN |
| | Mₘₐₓ = 7 300 kN | Mₘₐₓ = 4 300 kN |
| | ΔPₘₐₓ = 3.7 bar | ΔPₘₐₓ = 1.9 bar |

Grâce à la conception du dispositif telle que décrite précédemment, les moyens d'application de forces longitudinales 30 peuvent être écartés par déformation du parallélogramme formé par chaque vérin 31, bras de levier 34 et pylône 37 permettant de rendre disponible l'espace extérieur à la structure de fuselage et une inspection de celle-ci par l'extérieur.

En outre, la structure de fuselage étant montée par clampage, il est possible d'effectuer le démontage de celle-ci aisément, et d'inspecter également l'intérieur de la structure après l'application des efforts.

On notera en outre que le démontage de la structure en cours de test peut également être évité en utilisant de manière classique des méthodes d'inspection non destructives et en utilisant des capteurs placés préalablement en différents points de la structure de fuselage.

Cette structure de test permet d'étudier la tolérance en dommage, fatigue et statique d'une structure à double courbure. En particulier, il est possible de mesurer les contraintes appliquées à la structure de fuselage 10, enregistrées grâce à des jauges de contrainte, et d'observer tous les déplacements dans la structure de fuselage, dans toutes les directions de l'espace.

Bien entendu, la présente invention n'est pas limitée à l'exemple de réalisation tel que décrit précédemment.

En particulier, le nombre de vérins hydrauliques utilisés tant pour appliquer une force de torsion que pour appliquer une force de compression ou traction, n'est nullement limitatif. En outre, des moyens d'application de forces autres que des vérins hydrauliques pourraient être utilisés.

Par ailleurs, d'autres types de fixation de la structure de fuselage à ses extrémités pourraient être mis en oeuvre que ceux décrits précédemment par clampage.

## Revendications

1. Dispositif d'essais associé à une couronne de fuselage (10) à courbure longitudinale et courbure circonférentielle, comprenant des moyens d'application de forces (30, 40) sur ladite couronne de fuselage (10), **caractérisé en ce qu'**il comprend des moyens de support (50) de ladite couronne de fuselage (10) et des moyens d'application de forces (30, 40), **en ce que** les moyens d'application de forces (30, 40) sont montés entre lesdits moyens de support (50) et des moyens d'introduction de forces (70), solidaires de ladite couronne de fuselage (10) selon une ligne circonférentielle et **en ce que** les moyens d'application de forces comprennent des moyens d'application de forces de torsion (40) dans la direction circonférentielle, tangentes à la couronne de fuselage (10) et des moyens d'application de forces de traction/compression (30) dans la direction longitudinale, tangentes en leur point d'application à la couronne de fuselage (10).

2. Dispositif d'essais conforme à la revendication 1, **caractérisé en ce que** lesdits moyens d'introduction de forces (70) sont formés d'une structure circulaire solidaire de ladite couronne de fuselage (10) suivant une ligne circonférentielle.

3. Dispositif d'essais conforme à l'une des revendications 1 ou 2, **caractérisé en ce que** la couronne de fuselage (10) comprend une extrémité inférieure (10a) supportée sur lesdits moyens de support (50) et une extrémité supérieure (10b), et **en ce que** lesdits moyens d'introduction de forces (70) sont fixés à ladite extrémité supérieure (10b) de la couronne de fuselage (10).

4. Dispositif d'essais conforme à la revendication 3, **caractérisé en ce que** les moyens d'introduction de forces (70) comprennent des moyens de fixation (80) par pincement adaptés à solidariser en traction et en torsion lesdits moyens d'introduction de forces (70) et l'extrémité supérieure (10b) de la couronne de fuselage (10).

5. Dispositif d'essais conforme à l'une des revendications 1 à 4, **caractérisé en ce que** lesdits moyens de support (50) comportent une plateforme centrale (51) adaptée à supporter la couronne de fuselage (10) et les moyens d'application de forces de traction/compression (30), et une structure périphérique (54) adaptée à supporter les moyens d'application de forces de torsion (40).

6. Dispositif d'essais conforme à la revendication 5, **caractérisé en ce que** lesdits moyens d'application de forces de traction/compression (30) comportent au moins un vérin (31) adapté à appliquer un effort suivant un axe vertical et monté par une liaison pivot à ses extrémités autour d'un axe horizontal.

7. Dispositif d'essais conforme à l'une des revendications 5 ou 6, **caractérisé en ce que** lesdits moyens d'application de forces de torsion comportent au moins un vérin (41) fixé à un bras de levier (44) solidaire au moyen d'une liaison rotule (46b) aux moyens d'introduction de forces (70) et adapté à appliquer une force dans la direction circonférentielle, tangente à la couronne de fuselage (10).

## Patentansprüche

1. Einrichtung zum Prüfen, die einem Rumpfsegment (10) mit Longitudinal- und Umfangskrümmung zugehörig ist und Mittel zum Aufbringen von Kräften (30, 40) auf das Rumpfsegment (10) umfasst, **dadurch gekennzeichnet, dass** sie Tragmittel (50) für das Rumpfsegment (10) und die Mittel zum Aufbringen von Kräften (30, 40) umfasst, dadurch, dass die Mittel zum Aufbringen von Kräften (30, 40) zwischen den Tragmitteln (50) und Mitteln zum Einbringen von Kräften (70) montiert sind, die entlang einer Umfangslinie fest mit dem Rumpfsegment (10) verbunden sind, und dadurch, dass die Mittel zum Aufbringen von Kräften Mittel zum Aufbringen von Torsionskräften (40) in der Umfangsrichtung tangential zum Rumpfsegment (10) und Mittel zum Aufbringen von Zug-/Druckkräften (30) in der Längsrichtung umfassen, deren Angriffspunkt tangential zum Rumpfsegment (10) ist.

2. Prüfeinrichtung nach Anspruch 1, **dadurch gekennzeichnet, dass** die Mittel zum Einbringen von Kräften (70) aus einer kreisförmigen Struktur gebildet sind, die entlang einer Umfangslinie fest mit dem Rumpfsegment (10) verbunden ist.

3. Prüfeinrichtung nach Anspruch 1 oder 2, **dadurch gekennzeichnet, dass** das Rumpfsegment (10) ein unteres Ende (10a), das auf den Tragmitteln (50) getragen ist, und ein oberes Ende (10b) umfasst, und dadurch, dass die Mittel zum Einbringen von Kräften (70) am oberen Ende (10b) des Rumpfsegments (10) befestigt sind.

4. Prüfeinrichtung nach Anspruch 3, **dadurch gekennzeichnet, dass** die Mittel zum Einbringen von Kräften (70) Mittel zur Klemmbefestigung (80) umfassen, die so ausgelegt sind, dass sie die Mittel zum Einbringen von Kräften (70) und das obere Ende (10b) des Rumpfsegments (10) bei Zug und Torsion fest verbinden.

5. Prüfeinrichtung nach einem der Ansprüche 1 bis 4, **dadurch gekennzeichnet, dass** die Tragmittel (50) eine mittige Plattform (51), die so ausgelegt ist, dass sie das Rumpfsegment (10) und die Mittel zum Aufbringen von Zug-/Druckkräften (30) trägt, sowie eine Randstruktur (54) aufweisen, die so ausgelegt ist, dass sie die Mittel zum Aufbringen von Torsionskräften (40) trägt.

6. Prüfeinrichtung nach Anspruch 5, **dadurch gekennzeichnet, dass** die Mittel zum Aufbringen von Zug-/Druckkräften (30) mindestens einen Zylinder (31) aufweisen, der so ausgelegt ist, dass er entlang einer senkrechten Achse eine Kraft aufbringt, und an seinen Enden über eine Schwenkverbindung um eine waagerechte Achse herum montiert ist.

7. Prüfeinrichtung nach Anspruch 5 oder 6, **dadurch gekennzeichnet, dass** die Mittel zum Aufbringen von Torsionskräften mindestens einen Zylinder (41) aufweisen, der an einem Hebelarm (44) befestigt ist, der über ein Universalgelenk (46b) fest mit den Mitteln zum Einbringen von Kräften (70) verbunden und so ausgelegt ist, dass er in Umfangsrichtung, tangential zum Rumpfsegment (10), eine Kraft aufbringt.

## Claims

1. Test device associated with a fuselage ring section (10) having longitudinal curvature and circumferential curvature, comprising force application means (30, 40) for applying forces to the said fuselage ring section (10), **characterised in that** it comprises support means (50) for supporting the said fuselage ring section (10) and the force application means (30, 40), **in that** the force application means (30, 40) are mounted between the said support means (50) and force introduction means (70), secured to the said fuselage ring section (10) along a circumferential line, and **in that** the force application means comprise means (40) of applying torsion forces in the circumferential direction, tangential to the fuselage ring section (10), and means (30) of applying tension/compression forces in the longitudinal direction, tangential at their point of application to the fuselage ring section (10).

2. Test device according to Claim 1, **characterised in that** the said force introduction means (70) are formed of a circular structure secured to the said fuselage ring section (10) along a circumferential line.

3. Test device according to one of Claims 1 and 2, **characterised in that** the fuselage ring section (10) comprises a lower end (10a) supported on the said support means (50) and an upper end (10b), and **in that** the said force introduction means (70) are fixed to the said upper end (10b) of the fuselage ring section (10).

4. Test device according to Claim 3, **characterised in that** the force introduction means (70) comprise fixing means (80) using gripping designed to secure the said force introduction means (70) and the upper end (10b) of the fuselage ring section (10) in terms of tension and in terms of torsion.

5. Test device according to one of Claims 1 to 4, **characterised in that** the said support means (50) comprise a central platform (51) designed to support the fuselage ring section (10) and the means (30) of applying tension/compression forces, and a peripheral structure (54) designed to support the means (40) of applying torsion forces.

6. Test device according to Claim 5, **characterised in that** the said means (30) of applying tension/compression forces comprise at least one cylinder actuator (31) designed to apply a load along a vertical axis and mounted by a pivot connection at its ends about a horizontal axis.

7. Test device according to one of Claims 5 and 6, **characterised in that** the said means of applying torsion forces comprise at least one cylinder actuator (41) fixed to a lever arm (44) secured by means of a ball joint (46b) to the force introduction means (70) and designed to apply a force in the circumferential direction, tangential to the fuselage ring section (10).
